(19)

**Europäisches Patentamt**
**European Patent Office**
**Office européen des brevets**

(11) **EP 4 290 306 B1**

(12) **EUROPEAN PATENT SPECIFICATION**

(45) Date of publication and mention
of the grant of the patent:
**07.01.2026 Bulletin 2026/02**

(21) Application number: **22178424.2**

(22) Date of filing: **10.06.2022**

(51) International Patent Classification (IPC):
**G02F 1/21** *(2006.01)* **H01S 3/00** *(2006.01)*

(52) Cooperative Patent Classification (CPC):
**G02F 1/212;** G02F 2201/307; G02F 2202/20;
H01S 3/0078; H01S 3/0085

(54) **A HIGHLY-COHERENT FREQUENCY-AGILE LASER SYSTEM, NOTABLY FOR USE WITH, OR IN, COLD ATOM QUANTUM DEVICES**

HOCHKOHÄRENTES, FREQUENZAGILES LASERSYSTEM, INSBESONDERE ZUR VERWENDUNG MIT ODER IN QUANTENVORRICHTUNGEN FÜR KALTE ATOME

SYSTÈME LASER AGILE À FRÉQUENCE HAUTEMENT COHÉRENTE, NOTAMMENT POUR UNE UTILISATION AVEC, OU DANS, DES DISPOSITIFS QUANTIQUES À ATOMES FROIDS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.12.2023 Bulletin 2023/50**

(73) Proprietor: **TOYOTA JIDOSHA KABUSHIKI KAISHA**
**Toyota-shi, Aichi-ken, 471-8571 (JP)**

(72) Inventors:
• **KINGE, Sachin**
**1140 BRUSSELS (BE)**
• **LIEN, Yu-Hung**
**Birmingham, B15 2TT (GB)**
• **BONGS, Kai**
**Birmingham, B15 2TT (GB)**

(74) Representative: **Cabinet Beau de Loménie**
**103, rue de Grenelle**
**75340 Paris Cedex 07 (FR)**

(56) References cited:
WO-A1-2019/021010 US-A1- 2007 104 492
US-A1- 2016 142 148

• **PORZI CLAUDIO ET AL: "High-Capacity Single-Sideband Suppressed-Carrier Modulation with Integrated Optical Filter in Silicon-on-Insulator Technology", 2019 INTERNATIONAL WORKSHOP ON FIBER OPTICS IN ACCESS NETWORKS (FOAN), IEEE, 2 September 2019 (2019-09-02), pages 29 - 33, XP033674739, DOI: 10.1109/FOAN.2019.8933812**
• **MACRAE C D ET AL: "Optical frequency generation using fiber Bragg grating filters for applications in portable quantum sensing", ARXIV.ORG, CORNELL UNIVERSITY LIBRARY, 201 OLIN LIBRARY CORNELL UNIVERSITY ITHACA, NY 14853, 23 November 2020 (2020-11-23), XP081820458**
• **JAVIER S FANDI\~NO ET AL: "A Monolithic Integrated Microwave Photonics Filter", ARXIV.ORG, CORNELL UNIVERSITY LIBRARY, 201 OLIN LIBRARY CORNELL UNIVERSITY ITHACA, NY 14853, 21 December 2016 (2016-12-21), XP080741938, DOI: 10.1038/ NPHOTON.2016.233**

**Description**

The present invention relates to the field of laser systems and, more particularly, to a highly-coherent frequency-agile laser system notably for use in or with a cold atom quantum device or apparatus. The invention further relates to a method of manufacturing such a laser system and to a method of generating a light beam using such a laser system.

Cold atom quantum devices, notably sensing devices based on cold atom interferometry, are attracting considerable interest, notably for implementation of highly-accurate accelerometers and gyroscopes. A cold atom quantum sensor (CAQS) apparatus, for instance, employs light-beams at various stages during its operation. Typically, the operation of the CAQS apparatus involves a sequence of stages as summarized in Table 1 below.

TABLE 1

| STAGE | I | II | III | IV |
|---|---|---|---|---|
| PROCESS | Cooling and trapping of atoms | Setting of the atoms' quantum states | Modification of the atoms' quantum states (interrogation) | Measurement of the atoms' modified quantum states |

The stage I of the operation uses laser cool and trapping techniques, for example techniques including magneto-optical trap (MOT), sub-Doppler cooling, etc., to prepare the cold atomic sample so that its temperature is brought down to a few $\mu$K or lower. The following stage II state-preparation usually uses lasers, microwaves or both to prepare the sample in specific quantum states for the stage III interrogation, i.e., the sensing operation in which the parameter of interest, i.e., some characteristic of an external source, is imprinted into the atoms' quantum states by lasers. In the final stage IV, the quantum states of the atoms are measured by illuminating the sample with lasers.

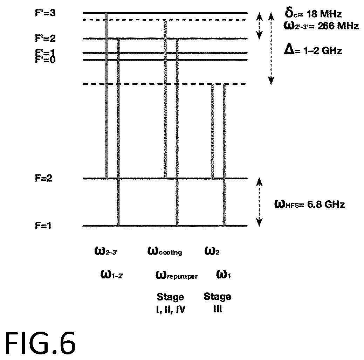

An atomic species that may be used in CAQS apparatus is rubidium (Rb) and, in particular, the D2 transition of rubidium may be exploited for making a measurement, notably for measuring a parameter characterizing an external source. As an example, Table 2 below and Fig. 6 give some typical values for light-beam frequencies used in certain rubidium cold atom quantum devices (CAQDs).

TABLE 2

| STAGE | I, II, and IV | III |
|---|---|---|
| EMPLOYED OPTICAL FREQUENCY, $\omega$ | $\omega_{cooling}$ is set to be lower than the frequency $\omega_{2\text{-}3'}$ of the $^{87}$Rb transition from state F=2 to state F'=3 by a detuning $\delta_c$. The value of the detuning $\delta_c$ changes over different stages, e.g. 18 MHz at I, a quick chirping from 18 to 60 MHz at II, and almost zero at IV.<br><br>$\omega_{repumper}$ is set to the frequency $\omega_{1\text{-}2'}$ of the $^{87}$Rb transition from state F=1 to state F'=2.<br>The difference $\omega_{repumper} - \omega_{cooling} = \omega_{HFS} + \omega_{2'\text{-}3'} - \delta_c$, where $\omega_{HFS}$ is the hyperfine splitting 6.834 GHz of $^{87}$Rb and $\omega_{2'\text{-}3'}$ is the separation between the state F'=2 and F'=3. | $\omega_{cooling}$ and $\omega_{repumper}$ are changed to $\omega_2$ and $\omega_1$, respectively. $\omega_2$ is offset lower from $\omega_{2\text{-}3'}$ by $\Delta$, which is about 1-2 GHz. $\omega_1$ is higher than $\omega_2$ by $\omega_{HFS} + \delta_D$. $\delta_D$ is a small chirping to compensate a potential shift of $\omega_{HFS}$ caused by the velocity of cold atoms, local gravity and the movement of CAQS. |

In cold atom quantum devices, the light-beam frequencies and power are swiftly varied in and between different stages to meet the requirements of the overall process. For optimum performance, the phase noise of the light-beams should be exceptionally low during the interrogation stage (stage III) to keep the noise of quantum operation low. Thus, there is a need for an optical sub-system that constitutes a frequency-agile laser system, advantageously one that produces highly coherent light beams.

Furthermore, CAQS apparatuses are not just used as laboratory equipment but are increasingly used in applications "in the field", for example to measure the strength of the earth's gravitational field at different geographical location. Such apparatuses may also be installed on various vehicles (e.g., cars, planes, ships) to sense the movement of the vehicle. To meet the demands of field applications, the laser system should be compact and robust, especially in mobile environments.

There have been different proposals of laser systems to provide light beams for CAQS by using either an IQ modulator (see "Application of Optical Single-Sideband Laser in Raman Atom Interferometry," by Zhu, L.-X., Lien, Y.-H., Hinton, A., Niggebaum, A., Rammeloo, C., Bongs, K., and Holynski, M. in Opt. Express 26(6), 6542 (2018); "Carrier-Suppressed Multiple-Single-sideband Laser Source for Atom Cooling and Interferometry" by Templier, S. et al. in Phys. Rev. Applied 16(4), 044018(2021)) or fibre Bragg gratings (see "Optical Frequency Generation Using Fiber Bragg Grating Filters for Applications in Portable Quantum Sensing" by Macrae, C. D., Bongs K., and Holynski, M. in Opt. Lett. 46(6), 1257 (2021)). Still other proposals for laser systems are described in the following documents:

- "High-Capacity Single-Sideband Suppressed-Carrier Modulation with Integrated Optical Filter in Silicon-on-Insulator Technology" by Porzi, C. et al., in 2019 International Workshop on Fiber Optics in Access Networks (FOAN), IEEE, 2 September 2019, pages 29-33:
- US 2016/142148
- US 2007/104492.

However, in each case, the output signal still contains some minuscule components at unwanted frequencies and, in order to suppress these, it becomes necessary to use additional FBGs or other optical components. The inclusion of such components has adverse effects on the complexity, compactness, and cost of the laser system.

The present invention has been made in the light of the above problems.

Embodiments of the present invention provide a laser system comprising:

an in-phase quadrature-phase optical modulator to generate a two-tone single-sideband, suppressed-carrier optical signal by modulation of an input laser beam; and

a single fibre Bragg grating to receive and filter the two-tone single-sideband, suppressed-carrier optical signal output by the in-phase quadrature phase optical modulator;

wherein a passband of the fibre Bragg grating excludes the residual carrier and harmonics of the two of tones in said two-tone single-sideband, suppressed-carrier optical signal; and

wherein the passband of the fibre Bragg grating includes a first frequency corresponding to a first state transition of a target cold atomic species, a second frequency corresponding to a second state transition of the target cold atomic species, a third frequency offset from the first frequency by a first offset amount, and a fourth frequency offset from the second frequency by a second offset amount, wherein the first and second offset amounts are the same.

By combining an in-phase quadrature-phase optical modulator (IQ modulator) with a fibre Bragg grating, the laser system according to the invention achieves a number of advantages. The laser system combines the optical single-sideband generation powered by the IQ modulator with the optical spectrum filtering implemented by the fibre Bragg filter to achieve the desired frequency agility, as well as spectral purity. Moreover, these properties are provided while simultaneously achieving robustness and compactness at the system level.

Further, one and the same fibre Bragg grating may be used to output a full set of cooling and repumper frequencies required during operation of a cold atomic quantum device (for instance, the frequencies listed in Table 2 above in respect of a rubidium cold atom quantum device).

Moreover, the new laser system may be implemented using components that exploit existing mature technologies, notably from the field of optical telecommunications, reducing time and costs involved in implementation.

A laser light source can be integrated into the laser system, or the laser system can be used with an external light source.

In certain embodiments of the invention, the laser system includes a nonlinear optical frequency mixing device to multiply the frequencies of the tones in the suppressed-carrier optical signal, for example to double the frequencies. This may be useful in cases where the employed IQ modulator operates in a frequency band which does not match the target frequencies in the desired output optical signal. This may enable the use of IQ modulators developed for the telecommunications industry, thereby reducing costs.

In preferred embodiments of the invention, the laser system includes an optical amplifier to boost the power of the output from the fibre Bragg grating. The filtered signal is boosted by an optical amplifier to an adequate level for operating CAQS, or efficient nonlinear optical frequency conversion in a cascading stage depending on the source wavelength.

Certain embodiments of laser system according to the invention comprise a frequency-control module configured to supply, to the in-phase quadrature-phase optical modulator, sets of control signals defining respective modulation-signal profiles, each modulation-signal profile producing a different pair of tones for the two-tone single sidebands in said two-tone single-sideband, suppressed-carrier optical signal output from the in-phase quadrature-phase optical modulator.

In certain embodiments of laser system according to the invention the in-phase quadrature-phase optical modulator comprises a first Mach-Zehnder interferometer and a second Mach-Zehnder interferometer on first and second parallel optical paths, and the input laser beam is split onto the first and second optical paths. The outputs from the first and second Mach-Zehnder interferometers are combined to form the third Mach-Zehnder interferometer and generate the two-tone single-sideband, suppressed-carrier optical signal that is output from the in-phase quadrature-phase optical modulator. The first Mach-Zehnder interferometer comprises a first waveguide and a second waveguide, and the second Mach-Zehnder interferometer comprises a third waveguide and a fourth waveguide. The in-phase quadrature-phase optical modulator controls the phases of the signals modulating the light in the first to fourth waveguides to output said two-tone single-sideband, suppressed-carrier optical signal having a selected pair of frequencies for said two tones.

Use of a Mach-Zehnder-based in-phase quadrature-phase optical modulator facilitates construction of an overall system that is compact and robust. For instance, a Mach-Zehnder-based design can be fabricated as an integrated device, e.g., an LiNbO$_3$ integrated device. Such embodiments are particularly well-suited for use in field instruments which need to be small (for portability) and robust (so as to withstand conditions encountered in the field).

Embodiments of the invention still further provide a cold atom quantum apparatus comprising one or more of the new laser systems.

The present invention further provides a method of manufacturing a laser system, the method comprising:

connecting the output of an in-phase quadrature-phase optical modulator to the input of a fibre Bragg grating; wherein:

the in-phase quadrature-phase optical modulator is configured to generate a two-tone, single-sideband, suppressed-carrier optical signal by modulation of an input laser beam;

the fibre Bragg grating is configured to receive and filter the two-tone, single-sideband, suppressed-carrier optical signal output by the in-phase quadrature phase optical modulator; and

a passband of the fibre Bragg grating excludes the residue of the carrier and harmonics of the frequencies of the plurality of tones in the two-tone, single-sideband, suppressed-carrier optical signal; and

the passband of the fibre Bragg grating includes a first frequency corresponding to a first state transition of a target cold atomic species, a second frequency corresponding to a second state transition of the target cold atomic species, a third frequency offset from the first frequency by a first offset amount, and a fourth frequency offset from the second frequency by a second offset amount, wherein the first and second offset amounts are the same.

The above-recited method provides comparable advantages to those discussed above in connection with the laser system.

The present invention yet further provides a method of generating a light beam, the method comprising:

inputting a laser beam to an in-phase quadrature-phase optical modulator;

modulating the light beam by the in-phase quadrature-phase optical modulator to generate a two-tone, single-sideband, suppressed-carrier optical signal by modulation of an input laser beam;

inputting the two-tone, single-sideband, suppressed-carrier optical signal output by the in-phase quadrature phase optical modulator into a fibre Bragg grating; and

filtering the two-tone, single-sideband, suppressed-carrier optical signal by the fibre Bragg grating;

wherein a passband of the fibre Bragg grating excludes the residue of the carrier and harmonics of the frequencies of the two of tones in the two-tone, single-sideband, suppressed-carrier optical signal; and

wherein the passband of the fibre Bragg grating includes a first frequency corresponding to a first state transition of a target cold atomic species, a second frequency corresponding to a second state transition of the target cold atomic species, a third frequency offset from the first frequency by a first offset amount, and a fourth frequency offset from the second frequency by a second offset amount, wherein the first and second offset amounts are the same.

Further features and advantages of the present invention will become apparent from the following description of certain embodiments thereof, given by way of illustration only, not limitation, with reference to the accompanying drawings in which:

Figure 1 illustrates schematically certain main modules in a laser system according to a first embodiment of the present invention;

Figure 2 illustrates a particular embodiment of in-phase quadrature-phase optical modulator that may be used in the laser system of FIG.1;

Figures 3A and 3B illustrate frequency components present in first and second examples of two-tone single-sideband suppressed-carrier signals output from the in-phase quadrature-phase modulator of Fig.2, wherein Fig.3A illustrates frequency components of a first example of output signal designed for use in Stages I, II and IV of operation of a cold atom quantum device, and Fig.3B illustrates frequency components of a second example of output signal designed for use in Stage III of operation of a cold atom quantum device;

Figure 4 illustrates schematically the structure of a fibre Bragg grating;

Figures 5A and 5B illustrate how the passband of a fibre Bragg grating may be set so as to remove unwanted carrier and harmonic components from two-tone, single-sideband, suppressed-carrier signals output from the in-phase quadrature-phase modulator of Fig.2, in the case where the signals input to the fibre Bragg grating correspond to the examples illustrated in Figs.3A and 3B, respectively; and

Figure 6 illustrates the relations between the output frequencies $\omega_{repumper}$, $\omega_{cooling}$, $\omega 1$, $\omega 2$ and the atomic energy levels.

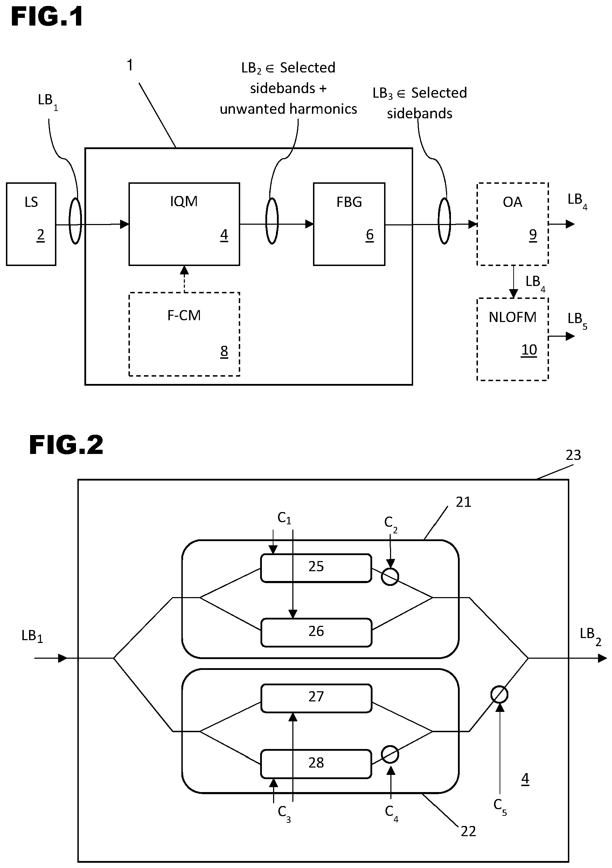

Laser systems according to various embodiments of the invention will now be described with reference to Figs. 1 to 5B.

The invention proposes a laser system that combines an optical in-phase quadrature-phase optical modulator and a fibre Bragg grating.

Fig.1 is a schematic representation of main modules comprised in a laser-beam supply system 1 according to a first embodiment of the invention.

The laser-beam supply system 1 according to the first embodiment of the invention includes an in-phase quadrature-phase (IQ) optical modulator 4 coupled to a fibre Bragg grating 6. The IQ optical modulator 4 is arranged to receive a laser beam $LB_1$ as input. The input laser beam $LB_1$ may be generated by a source internal to the laser system 1, or by an external source 2 as illustrated in Fig.1. The source of the input light beam $LB_1$ may be, for example, a narrow linewidth laser diode or fibre laser, etc.

In this embodiment, I IQ optical modulator 4 is configured to modulate the input light beam $LB_1$ to generate a two-tone, single-sideband, carrier-suppressed signal $LB_2$. The frequencies of the two tones in the two-tone, single-sideband, carrier-suppressed signal $LB_2$ may be selected, for example, so as to correspond to a pair of frequencies required during a particular phase of operation of a cold atom quantum device. Thus, for instance, the modulation frequencies used in the IQ optical modulator 4 may be controlled so that the frequencies of the pair of tones in the output signal $LB_2$ correspond to the $\omega_{cooling}$ and $\omega_{repumper}$ frequencies used in stages I and II of operation of a rubidium cold atom quantum device (see Table 2 above). Then, for stage III of operation of a rubidium cold atom quantum device, the modulation frequencies used in the IQ optical modulator 4 may be changed so that the frequencies of the two tones in the two-tone, single-sideband, carrier-suppressed signal $LB_2$ correspond to $\omega_2$ and $\omega_1$ required for this stage of operation. Then, for stage IV of operation of a rubidium cold atom quantum device, the modulation frequencies can be changed back so that the frequencies of the pair of tones in the output signal $LB_2$ revert back to the $\omega_{cooling}$ and $\omega_{repumper}$.

It will be understood that the use of an IQ optical modulator 4 to generate the two-tone, single-sideband, suppressed-carrier signal $LB_2$, enables the frequencies of the tones in the output signal $LB_2$ to be set and changed easily and rapidly. Any convenient technique may be used for setting and changing the modulation frequencies used in the IQ modulator 4. One simple approach consists in using a frequency-control module 8 to supply the IQ modulator 4 with sets of two-tone modulation signals $C_1$ and its quadrature counterpart $C_3$, and a set of control signals $C_2$, $C_4$ and $C_5$, setting the relative phases between different arms of Mach-Zehnder sub-interferometers for suppressed-carrier operation. The modulation signals/control signals are represented schematically in Fig.2 by the arrows labelled $C_1$, $C_2$, $C_3$, $C_4$ and $C_5$. Each set of modulation signals/control signals $C_1$-$C_5$ can be considered to be a profile configured to cause the IQ modulator 4 to generate a desired pair of frequencies for the two tones in the output signal $LB_2$.

It will be understood that, in addition to the modulation signals, bias signals are also supplied to the various Mach-Zehnder interferometers of the IQ modulator to generate a carrier-suppressed output. As this control functionality is known to the skilled person it will not be elaborated upon here.

In certain embodiments of the invention, the laser system includes a nonlinear optical frequency mixing device 10 to double the frequencies of the two-tone suppressed-carrier optical signal. This may be useful in cases where the employed IQ modulator 4 operates in a frequency band which does not match the target frequencies in the desired output optical signal. For example, many -available IQ modulators are designed to operate in the 1540-1570 nm wavelength band, for use in telecommunications applications. Certain embodiments of the invention make use of such commercially-available IQ modulators, then multiply up the frequencies in the tones of the carrier-suppressed optical signal, and thus implement the overall laser system at reduced cost compared to the expense of constructing a bespoke IQ modulator.

So, for example, in the case of generating light beams for use in a cold atom quantum sensor having rubidium as the target sample, using an IQ modulator which generates the laser wavelength at 1560 nm, it is appropriate to add an optical frequency doubling stage 10, to convert the wavelength from 1560 nm to 780 nm.

The optional nonlinear optical frequency mixer (NLOFM) may be implemented using any convenient design of this type of device, for example, a periodic-poled lithium niobate (PPLN) waveguide optical frequency doubler.

The IQ modulator 4 outputs the two-tone, single-sideband, carrier-suppressed signal $LB_2$ to the fibre Bragg grating 6, which receives and filters the signal to produce an output signal $LB_3$. The passband of the fibre Bragg grating is set so as to filter out from the signal $LB_2$ unwanted harmonics of the two tones in the signal $LB_2$ as well as to filter out remnants at the initial carrier frequency used in the IQ modulator 4. The fibre Bragg grating eliminates, or significantly reduces the amplitude of, the unwanted harmonics/carrier so that the signal $LB_3$ output from the fibre Bragg grating 6, and from the laser system 1 as a whole, has a high degree of spectral purity.

In preferred embodiments of the invention, the light beam $LB_3$ is further boosted through an optical amplifier 9, which is chosen to match the wavelength of the source LS, to produce the output signal $LB_4$. Depending on the wavelength of the source LS, $LB_4$ will be either directed to the CAQS or to a following stage for nonlinear optical frequency mixing to produce a signal $LB_5$.

It will be understood that the light beam $LB_4$ or $LB_5$ output from the laser system 1 can be expanded, collimated, split, etc. as required by downstream processes in a cold atom quantum device or the like, using various optical subsystems. For example, optical fibres can couple the light beam $LB_3$ to an experiment site/location of an atom sample to be manipulated.

Fig.2 is a schematic representation illustrating the basic structure and operational principles of an optical in-phase quadrature-phase modulator (IQ modulator) that may be used, according to preferred embodiments of the invention, to implement the modulator 4 of FIG.1.

In the embodiment illustrated in FIG.2, the optical IQ modulator 4 comprises two arms, or parallel optical paths. A first of the optical paths is essentially a Mach-Zehnder interferometer 21 containing two identical waveguides 25, 26 configured as phase modulators. A second of the optical paths is also essentially a Mach-Zehnder interferometer 22 containing two identical waveguides 27, 28 configured as phase modulators. The combination of the first two Mach-Zehnder interferometers 21 and 22 forms the third interferometer 23.

Different designs may be used to implement a Mach-Zehnder-based optical modulator according to the embodiment of FIG.2. However, the overall laser system 1 can be implemented in a particularly compact and robust manner in the case where an integrated design is adopted. For example, the IQ modulator may be implemented as an integrated $LiNbO_3$ device, for example according to the design described in the paper "X-Cut Lithium Niobate Optical Single-Sideband Modulator," by Higuma, K., Oikawa, S., Hashimoto, Y., Nagata, H., and Izutsu, M., in Electron. Lett. 37(8), 515 (2001) or the design described in the paper "Single-Sideband Modulation Performance of a $LiNbO_3$ Integrated modulator Consisting of Four-Phase modulator Waveguides" by Shimotsu, S., Oikawa, S., Saitou, T., Mitsugi, N., Kubodera, K., Kawanishi, T., and Izutsu, M., in IEEE Photon. Technol. Lett., 13(4), 364(2001).

When a light beam having a carrier frequency $\omega$ passes through a phase modulator that is modulated by a modulation frequency $\Omega$, the light beam develops a series of sidebands that are spaced from one another by a spacing equal to the modulation frequency $\Omega$. Thus, the spectrum generated by a phase modulator is a double-sideband (DSB) spectrum, i.e., sidebands exist on both sides of the carrier frequency.

However, a single-sideband signal may be obtained, with a suppressed carrier frequency, by appropriate control of the optical phases of the modulation signals applied to the components in the IQ modulator 4 illustrated in Fig.2. The main frequency component in the optical single sideband signal is either at $\omega + \Omega$ or at $\omega - \Omega$, potentially with some odd-order higher harmonics having a small amplitude also being present and, possibly, a remnant of the carrier frequency $\omega$.

More particularly, considering that the modulation signal applied in the first Mach-Zehnder interferometer 21 is $\varphi_{21} = \varphi \sin \Omega t$ and the modulation signal applied in the second Mach-Zehnder interferometer 22 is $\varphi_{22} = \varphi \cos \Omega t$ (where $\varphi$ is the modulation index and $\Omega$ is the modulation angular frequency), an optical single-sideband signal having a suppressed carrier may be obtained as the output $LB_2$ of the IQ modulator 4 in the case where the following conditions are respected:

 a) the optical phases of the two phase modulators 25, 26 in the first Mach-Zehnder interferometer 21 differ from one another by $\pi$ through $C_2$;
 b) the optical phases of the two phase modulators 27, 28 in the second Mach-Zehnder interferometer 22 differ from one another by $\pi$ through $C_4$;
 c) the relative optical phase between the first and second Mach-Zehnder interferometers 21, 22 on the two arms, is kept at $\pi/2$ through $C_5$.

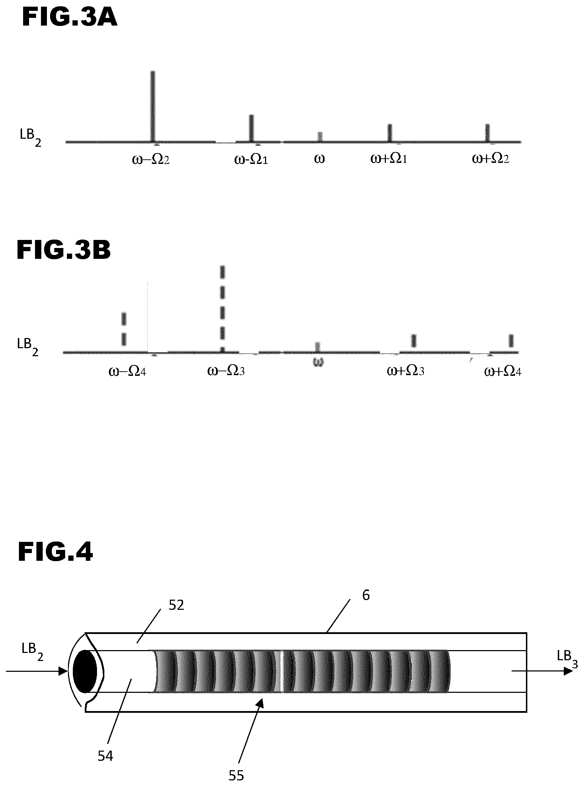

By applying multiple modulation frequencies $\Omega 1$, $\Omega 2$..., multiple different optical frequencies $\omega + \Omega 1$, $\omega + \Omega 2$, and so on may be produced using a single IQ modulator. For example, two modulation frequencies $\Omega 1$ and $\Omega 2$ may be applied simultaneously to the IQ modulator 4 to produce a two-tone optical single-sideband suppressed-carrier signal $LB_2$. An example of such a signal $LB_2$ is illustrated in Fig.3A. In the example illustrated in Fig.3A, two desired tones at frequencies $\omega - \Omega 2$ and $\omega - \Omega 1$ are present in the output signal $LB_2$. Fig.3B illustrates another example of an optical single-sideband suppressed-carrier signal $LB_2$ that may be generated using the IQ modulator 4 illustrated in Fig.2, by using a pair of modulation signals at frequencies $\Omega 3$ and $\Omega 4$. In the example illustrated in Fig.3B, two desired tones at frequencies $\omega - \Omega 4$ and $\omega - \Omega 3$ are present in the output signal $LB_2$. For instance, the signal illustrated in Fig.3A can be used to provide the $\omega_{cooling}$ and $\omega_{repumper}$ frequencies used in stages I, II and IV of operation of a cold atom quantum device, and the signal illustrated in Fig.3B can be used to provide $\omega_{cooling}$ and $\omega_{repumper}$ frequencies used in stage III.

Incidentally, intermodulation products deriving from the simultaneous use of the two tones $\Omega 1$ and $\Omega 2$ may be disregarded by virtue of the modulation index/power being low and the IQ modulator being operated in the linear regime.

As can be seen in Fig.3A, although two desired tones at frequencies $\omega - \Omega 2$ and $\omega - \Omega 1$ are present in the output signal $LB_2$, unwanted harmonics at $\omega + \Omega 1$ and $\omega + \Omega 2$ are also present, albeit at lower amplitudes. Also, there is a small remaining component at the carrier frequency ω (i.e., the carrier is not completely suppressed). Similarly, as can be seen in Fig.3B, although two desired tones at frequencies ω-Ω4 and ω-Ω3 are present in the output signal $LB_2$ in this example, unwanted harmonics at ω+Ω3 and ω+Ω4 are also present, together with a remnant at the carrier frequency ω.

The fibre Bragg grating 6 filters the signal $LB_2$ output by the IQ modulator 4 so as to achieve a higher degree of spectral purity.

FIG.4 illustrates schematically the structure of a fibre Bragg grating. The fibre Bragg grating 6 is an optical fibre device having a cladding layer 52 and a core 54. The fibre Bragg grating has a region 55 where the refractive index of the core 54 varies in a periodic manner (typically achieved by photoimprinting a modulation on the refractive index of the photosensitive fibre core 54 using a hologram). As a consequence of this periodic refractive-index modulation, light propagating through the fibre Bragg grating is filtered. In particular, light is reflected and does not propagate onwards to the output from the fibre Bragg grating if it has a frequency $\lambda_B$ that meets the Bragg condition, i.e., $\lambda_B = 2 \cdot \eta_{eff} \cdot \Lambda_G$, where $\eta_{eff}$ is the effective refractive index experienced by the light travelling in the fiber, and $\Lambda_G$ is the period of the refractive index modulation. The other frequencies which do not meet the Bragg condition are transmitted along the fibre.

Various different designs of fibre Bragg grating may be used in embodiments of the present invention. Some examples of different types of grating, and techniques for their fabrication, are discussed, in the context of their use as sensors, in the paper "Fiber Bragg Grating Sensors for Harsh Environments," by Mihailov, S. J. in Sensors 12(2), 1898 (2012). As mentioned in the Mihailov paper, fibre Bragg gratings may be particularly compact and robust and, therefore, are well suited to incorporation into devices that will be used in the field.

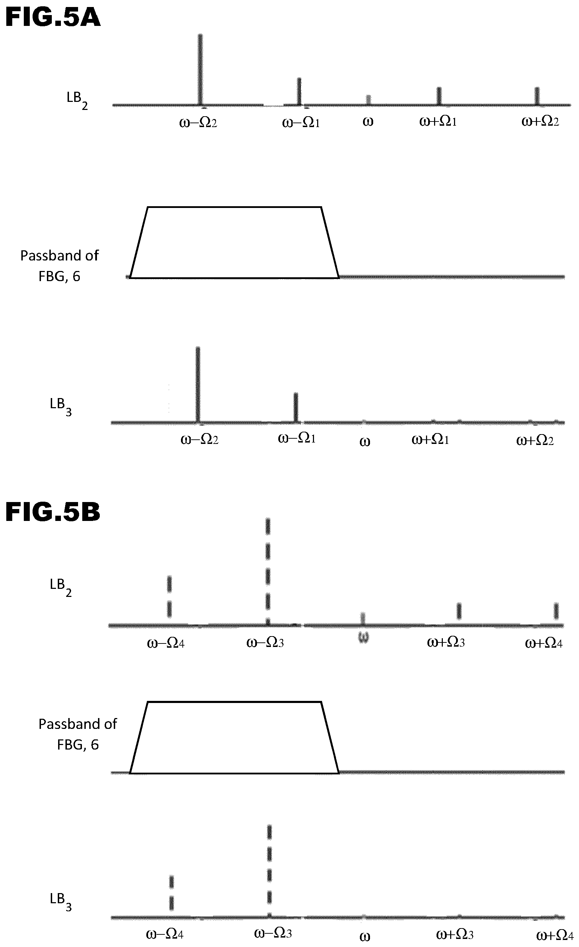

Fig.5A illustrates the filtering effect of the fibre Bragg grating 6, taking a signal as illustrated in Fig.3A as the input signal $LB_2$. It can be seen that the passband of the fibre Bragg grating 6 includes the frequencies of the desired tones at ω - Ω2 and ω - Ω1, but excludes the frequencies of the unwanted carrier and harmonics. Thus, the signal $LB_3$ output from the fibre Bragg grating 6 is spectrally pure.

Fig.5B illustrates the filtering effect of the fibre Bragg grating 6, taking a signal as illustrated in Fig.3B as the input signal $LB_2$. It can be seen that the passband of the fibre Bragg grating 6 includes the frequencies of the desired tones at ω - Ω4 and ω - Ω3, but excludes the frequencies of the unwanted carrier and harmonics. Thus, again, the signal $LB_3$ output from the fibre Bragg grating 6 is spectrally pure.

It can be seen from Figs.5A and 5B that, according to the present embodiment, the passband of the fibre Bragg grating 6 encompasses all four of the desired frequencies at ω - Ω1, ω - Ω2, ω - Ω3, and ω - Ω4. A laser apparatus 1 according to the present embodiment of the invention can be configured and operated to supply the cooling and repumper frequencies required for all stages of operation of a CAQ device, e.g. a rubidium cold atom quantum device.

In preferred embodiments of the invention, the Fiber Bragg grating is configured to function as a narrow bandpass filter by combining an optical circulator to take the narrow band reflection from the FBG as another output. In short, in such embnodiments, the FBG has a single input and two outputs, i.e. one transmissive output and one reflective output.

Experiments conducted by the present inventors have shown that the laser system according to the first embodiment of the invention, and incorporating an IQ modulator 4 according to the design illustrated in Fig.2 coupled to a fibre Bragg grating, can suppress unwanted frequencies (unwanted harmonics and carrier) by -40 dB or even more.

A laser system as described above may be manufactured by connecting the output of an in-phase quadrature-phase optical modulator that is configured to generate a two-tone, single-sideband, suppressed-carrier optical signal by modulation of an input laser beam to the input of a fibre Bragg grating having a passband which excludes harmonics of the frequencies of the two tones in the two-tone single-sideband, suppressed-carrier optical signal.

A second embodiment of the invention provides a cold atom quantum apparatus comprising a laser system as described above. It will be understood that although the examples given above relate to rubidium cold atom quantum devices, and the repumper and cooling frequencies used in such devices, the invention is not limited to use in rubidium cold atom quantum devices. Indeed, an advantage provided by embodiments of the invention is the frequency-agile character of the IQ modulator which generates the target frequencies in the signal $LB_2$. Pairs of tones at selected different frequencies, as required by the state transitions used in the target cold atom quantum device, can be included in the signal $LB_2$ by changing the modulation frequencies Ωj used in the IQ modulator 4.

A third embodiment of the invention provides a method of generating a light beam by inputting a laser beam to an in-phase quadrature-phase optical modulator that is configured to generate a two-tone, single-sideband, suppressed-carrier optical signal by modulation of the input laser beam and inputting the two-tone, single-sideband, suppressed-carrier optical signal output by the in-phase quadrature phase optical modulator into a fibre Bragg grating having a passband which excludes harmonics of the frequencies of the two tones in the input two-tone single-sideband suppressed-carrier optical signal.

Although the present invention has been described above with reference to certain specific embodiments, it will be understood that the invention is not limited by the particularities of the specific embodiments. Numerous variations, modifications and developments may be made in the specified embodiments within the scope of the appended claims.

For instance, although the description above refers to the use case where the new light sources are employed to supply light beams to cold atom quantum devices or apparatus used in sensing applications, light sources according to embodiments of the invention are usable more generally in quantum applications, including but not limited to quantum memory, quantum computation, teleportation, and others. The skilled person will readily understand that for different applications the laser wavelength is adapted to different species, e.g., different species of alkali metal atoms, used as the sample.

Furthermore, specific embodiments have been described above in the context of a laser system that produces a two-tone carrier-suppressed optical signal. However, it is to be understood that, according to other implementations which are not according to the invention, the output may be a multi-tone signal including components at three target frequencies, or components at more than three target frequencies. As the skilled person will understand, the number of tones in the output signal is controlled by modifying the number of Mach-Zehnder sub-modulators used in the IQ modulator, and adjusting the modulation signals and bias signals. Nevertheless, in some circumstances, for example in embodiments of the invention in which an optical frequency mixing device is used to multiply the frequencies of the tones in the suppressed-carrier optical signal, it is advantageous for the multi-tone optical signal to be a two-tone optical signal, so as to avoid potential problems that may be caused by frequency mixing/intermodulation.

## Claims

1. A laser system (1) comprising:

   an in-phase quadrature-phase optical modulator (4) to generate a two-tone, single-sideband, suppressed-carrier optical signal by modulation of an input laser beam; and
   a single fibre Bragg grating to receive and filter the two-tone, single-sideband, suppressed-carrier optical signal output by the in-phase quadrature phase optical modulator (4);
   wherein a passband of the fibre Bragg grating excludes harmonics of the two tones in the two-tone, single-sideband, suppressed-carrier optical signal; and
   wherein the passband of the fibre Bragg grating includes a first frequency corresponding to a first state transition of a target cold atomic species, a second frequency corresponding to a second state transition of the target cold atomic species, a third frequency offset from the first frequency by a first offset amount, and a fourth frequency offset from the second frequency by a second offset amount, wherein the first and second offset amounts are the same.

2. The laser system (1) of claim 1, comprising a frequency-control module (6) configured to supply sets of control signals defining respective modulation-signal profiles to the in-phase quadrature-phase optical modulator (4), each modulation-signal profile defining a different pair of frequencies for the two tones in said two-tone single-sideband, suppressed-carrier optical signal output from the in-phase quadrature-phase optical modulator (4).

3. The laser system (1) of any one of claims 1 to 2, wherein:

   the in-phase quadrature-phase optical modulator (4) comprises a first Mach-Zehnder interferometer (21) and a second Mach-Zehnder interferometer (22) on first and second parallel optical paths, the input laser beam being split onto the first and second optical paths and the outputs from the first and second Mach-Zehnder interferometers being combined to form the two-tone, single-sideband, suppressed-carrier optical signal output from the in-phase quadrature-phase optical modulator (4);
   the first Mach-Zehnder interferometer (21) comprises a first waveguide (25) and a second waveguide (26);
   the second Mach-Zehnder interferometer (22) comprises a third waveguide (27) and a fourth waveguide (28); and
   the in-phase quadrature-phase optical modulator (4) is configured to control the phases of the signals modulating the light in the first to fourth waveguides (25-28) to output said two-tone, single-sideband, suppressed-carrier optical signal having a selected frequency of said single sideband.

4. The laser system (1) of any one of claims 1 to 3, further comprising an optical amplifier (9) arranged to boost the power of the output from the fibre Bragg grating.

5. The laser system (1) of any one of claims 1 to 4, further comprising a nonlinear optical frequency mixing device (10) to multiply the frequencies of the two-tone suppressed-carrier optical signal.

6. The laser system (1) of any one of claims 1 to 5, wherein the in-phase quadrature-phase optical modulator is an integrated $LiNbO_3$ modulator.

7. A cold atom quantum apparatus comprising a laser system (1) according to any one of claims 1 to 6.

8. A method of manufacturing a laser system (1), the method comprising:

connecting the output of an in-phase quadrature-phase optical modulator (4) to the input of a single fibre Bragg grating (6);
wherein:

the in-phase quadrature-phase optical modulator (4) is configured to generate a two-tone, single-sideband, suppressed-carrier optical signal by modulation of an input laser beam;
the fibre Bragg grating (6) is configured to receive and filter the two-tone, single-sideband, suppressed-carrier optical signal output by the in-phase quadrature phase optical modulator (4); and
a passband of the fibre Bragg grating excludes harmonics of the frequencies of the two of tones in said two-tone single-sideband, suppressed-carrier optical signal; and
the passband of the fibre Bragg grating includes a first frequency corresponding to a first state transition of a target cold atomic species, a second frequency corresponding to a second state transition of the target cold atomic species, a third frequency offset from the first frequency by a first offset amount, and a fourth frequency offset from the second frequency by a second offset amount, wherein the first and second offset amounts are the same.

9. The manufacturing method of claim 8, wherein the in-phase quadrature-phase optical modulator (4) comprises a first Mach-Zehnder interferometer (21) and a second Mach-Zehnder interferometer (22) on first and second parallel optical paths, the input laser beam being split onto the first and second optical paths and the outputs from the first and second Mach-Zehnder interferometers being combined to form a two-tone, single-sideband, suppressed-carrier optical signal output from the in-phase quadrature-phase optical modulator (4);

the first Mach-Zehnder interferometer (21) comprises a first waveguide (25) and a second waveguide (26);
the second Mach-Zehnder interferometer (22) comprises a third waveguide (27) and a fourth waveguide (28); and
the in-phase quadrature-phase optical modulator (4) controls the phases of the signals modulating the light in the first to fourth waveguides (25-28) to output said two-tone single-sideband, suppressed-carrier optical signal having a selected frequency of said single sideband.

10. The manufacturing method of any one of claims 8 to 9, wherein the in-phase quadrature-phase optical modulator is an integrated $LiNbO_3$ modulator.

11. The manufacturing method of any one of claims 8 to 10, and comprising connecting, downstream of the fibre Bragg grating (6), a nonlinear optical frequency mixing device (10) configured to multiply the frequencies of the two-tone suppressed-carrier optical signal.

12. A method of generating a light beam, the method comprising:

inputting a laser beam to an in-phase quadrature-phase optical modulator (4);
modulating the light beam by the in-phase quadrature-phase optical modulator (4) to generate a two-tone, single-sideband, suppressed-carrier optical signal by modulation of an input laser beam;
inputting the two-tone, single-sideband, suppressed-carrier optical signal output by the in-phase quadrature phase optical modulator (4) into a fibre Bragg grating (6); and
filtering the two-tone single-sideband, suppressed-carrier optical signal by the fibre Bragg grating (6);
wherein a passband of the fibre Bragg grating excludes harmonics of the frequencies of the two of tones in said single-sideband, suppressed-carrier optical signal; and
wherein the passband of the fibre Bragg grating includes a first frequency corresponding to a first state transition of a target cold atomic species, a second frequency corresponding to a second state transition of the target cold atomic species, a third frequency offset from the first frequency by a first offset amount, and a fourth frequency offset from the second frequency by a second offset amount, wherein the first and second offset amounts are the same.

**Patentansprüche**

1. Lasersystem (1), umfassend:

einen optischen In-Phasen- und Quadratur-Phasen-Modulator (4) zum Erzeugen eines optischen Zweiton-Einseitenbandsignals mit unterdrücktem Träger durch Modulation eines Eingangslaserstrahls; und
ein einzelnes Faser-Bragg-Gitter zum Empfangen und Filtern des optischen Zweiton-Einseitenbandsignals mit unterdrücktem Träger durch den optischen In-Phasen- und Quadratur-Phasen-Modulator (4);
wobei ein Durchlassbereich des Faser-Bragg-Gitters die Oberschwingungen der beiden Töne im optischen Zweiton-Einseitenbandsignal mit unterdrücktem Träger ausschließt; und
wobei der Durchlassbereich des Faser-Bragg-Gitters eine erste Frequenz , die einem ersten Zustandsübergang einer Zielkaltatomspezies entspricht, eine zweite Frequenz, die einem zweiten Zustandsübergang einer Zielkaltatomspezies entspricht, eine dritte Frequenz, die um einen ersten Versatzbetrag von der ersten Frequenz versetzt ist, und eine vierte Frequenz, die um einen zweiten Versatzbetrag von der zweiten Frequenz versetzt ist, beinhaltet, wobei der erste und der zweite Offsetbetrag gleich sind.

2. Lasersystem (1) nach Anspruch 1, umfassend ein Frequenzsteuermodul (6), das konfiguriert ist, um Sätze von Steuersignalen, die entsprechende Modulationssignalprofile definieren, dem optischen In-Phasen- und Quadratur-Phasen-Modulator (4) bereitzustellen, wobei jedes Modulationssignalprofil ein anderes Paar von Frequenzen für die zwei Töne in dem optischen Zweiton-Einseitenbandsignal mit unterdrücktem Träger, das vom optischen In-Phasen- und Quadratur-Phasen-Modulator (4) ausgegeben wird, definiert.

3. Lasersystem (1) nach einem der Ansprüche 1 bis 2, wobei:

der optische In-Phasen- und Quadratur-Phasen-Modulator (4) ein erstes Mach-Zehnder-Interferometer (21) und ein zweites Mach-Zehnder-Interferometer (22) auf ersten und zweiten parallelen optischen Pfaden umfasst, wobei der Eingabelaserstrahl auf den ersten und zweiten optischen Pfad aufgeteilt und die Ausgänge vom ersten und zweiten Mach-Zehnder-Interferometer kombiniert werden, um das optische Zweiton-Einseitenbandsignals mit unterdrücktem Träger zu bilden, das vom optischen In-Phasen- und Quadratur-Phasen-Modulator (4) ausgegeben wird;
das erste Mach-Zehnder-Interferometer (21) einen ersten Wellenleiter (25) und einen zweiten Wellenleiter (26) umfasst;
das zweite Mach-Zehnder-Interferometer (22) einen dritten Wellenleiter (27) und einen vierten Wellenleiter (28) umfasst; und
der optische In-Phasen- und Quadratur-Phasen-Modulator (4) konfiguriert ist, um die Phasen der Signale, die das Licht in den ersten bis vierten Wellenleitern (25-28) modulieren, zu steuern, um das optische Zweiton-Einseitenbandsignal mit unterdrücktem Träger auszugeben, das eine ausgewählte Frequenz des Einseitenbands aufweist.

4. Lasersystem (1) nach einem der Ansprüche 1 bis 3, weiter umfassend einen optischen Verstärker (9), der angeordnet ist, um die Leistung des Ausgangs vom Faser-Bragg-Gitter zu verstärken.

5. Lasersystem (1) nach einem der Ansprüche 1 bis 4, weiter umfassend eine nichtlineare optische Frequenzmischvorrichtung (10), um die Frequenzen des optischen Zweiton-Signals mit unterdrücktem Träger zu multiplizieren.

6. Lasersystem (1) nach einem der Ansprüche 1 bis 5, wobei der optische In-Phasen- und Quadratur-Phasen-Modulator ein integrierter $LiNbO_3$-Modulator ist.

7. Kaltatom-Quantenapparat, umfassend ein Lasersystem (1) nach einem der Ansprüche 1 bis 6.

8. Verfahren zum Herstellen eines Lasersystems (1), wobei das Verfahren Folgendes umfasst:

Verbinden des Ausgangs eines optischen In-Phasen- und Quadratur-Phasen-Modulators (4) mit dem Eingang eines einzelnen Faser-Bragg-Gitters (6);
wobei:

der In-Phasen- und Quadratur-Phasen-Modulator (4) konfiguriert ist, um ein optisches Zweiton-Einseitenbandsignal mit unterdrücktem Träger durch Modulation eines Eingangslaserstrahls zu generieren;

das Faser-Bragg-Gitter (6) konfiguriert ist, um das optische Zweiton-Einseitenbandsignal mit unterdrücktem Träger zu empfangen und zu filtern, das vom optischen In-Phasen- und Quadratur-Phasen-Modulator (4) ausgegeben wurde; und

ein Durchlassbereich des Faser-Bragg-Gitters die Oberschwingungen der Frequenzen der zwei Töne in dem optischen Zweiton-Einseitenbandsignal mit unterdrücktem Träger ausschließt; und

der Durchlassbereich des Faser-Bragg-Gitters eine erste Frequenz, die einem ersten Zustandsübergang einer Zielkaltatomspezies entspricht, eine zweite Frequenz, die einem zweiten Zustandsübergang einer Zielkaltatomspezies entspricht, eine dritte Frequenz, die um einen ersten Versatzbetrag von der ersten Frequenz versetzt ist, und eine vierte Frequenz, die um einen zweiten Versatzbetrag von der zweiten Frequenz versetzt ist, beinhaltet, wobei der erste und der zweite Versatzbetrag gleich sind.

9. Herstellungsverfahren nach Anspruch 8, wobei der optische In-Phasen- und Quadratur-Phasen-Modulator (4) ein erstes Mach-Zehnder-Interferometer (21) und ein zweites Mach-Zehnder-Interferometer (22) auf ersten und zweiten parallelen optischen Pfaden umfasst, wobei der Eingabelaserstrahl auf den ersten und zweiten optischen Pfad aufgeteilt wird und die Ausgänge vom ersten und zweiten Mach-Zehnder-Interferometer kombiniert werden, um einen optischen Zweiton-Einseitenbandsignalausgang mit unterdrücktem Träger vom optischen In-Phasen- und Quadratur-Phasen-Modulator (4) zu bilden;

das erste Mach-Zehnder-Interferometer (21) einen ersten Wellenleiter (25) und einen zweiten Wellenleiter (26) umfasst;

das zweite Mach-Zehnder-Interferometer (22) einen dritten Wellenleiter (27) und einen vierten Wellenleiter (28) umfasst; und

der optische In-Phasen- und Quadratur-Phasen-Modulator (4) die Phasen der Signale, die das Licht in den ersten bis vierten Wellenleitern (25-28) modulieren, steuert, um das optische Zweiton-Einseitenbandsignal mit unterdrücktem Träger mit einer ausgewählten Sequenz des Einseitenbands auszugeben.

10. Herstellungsverfahren nach einem der Ansprüche 8 bis 9, wobei der optische In-Phasen- und Quadratur-Phasen-Modulator ein integrierter $LiNbO_3$-Modulator ist.

11. Herstellungsverfahren nach einem der Ansprüche 8 bis 10, umfassend das Anschließen, nachgelagert vom Faser-Bragg-Gitter (6), einer nichtlinearen optischen Frequenzmischvorrichtung (10), die konfiguriert ist, um die Frequenzen des optischen Zweiton-Signals mit unterdrücktem Träger zu multiplizieren.

12. Verfahren zum Erzeugen eines Lichtstrahls, wobei das Verfahren Folgendes umfasst:

Eingeben des optischen In-Phasen- und Quadratur-Phasen-Modulators (4);

Modulieren des Lichtstrahls durch den optischen In-Phasen- und Quadratur-Phasen-Modulator (4), um ein optisches Zweiton-Einseitenbandsignal mit unterdrücktem Träger durch Modulation eines Eingangslaserstrahls zu generieren;

Eingeben des optischen Zweiton-Einseitenbandsignals mit unterdrücktem Träger, das vom optischen In-Phasen- und Quadratur-Phasen-Modulator (4) in das Faser-Bragg-Gitter (6) ausgegeben wurde; und

Filtern des optischen Zweiton-Einseitenbandsignals mit unterdrücktem Träger durch das Faser-Bragg-Gitter (6);

wobei ein Durchlassbereich des Faser-Bragg-Gitters die Oberschwingungen der Frequenzen der zwei Töne in dem optischen Einseitenbandsignal mit unterdrücktem Träger ausschließt; und

wobei der Durchlassbereich des Faser-Bragg-Gitters eine erste Frequenz, die einem ersten Zustandsübergang einer Zielkaltatomspezies entspricht, eine zweite Frequenz, die einem zweiten Zustandsübergang einer Zielkaltatomspezies entspricht, eine dritte Frequenz, die um einen ersten Versatzbetrag von der ersten Frequenz versetzt ist, und eine vierte Frequenz, die um einen zweiten Versatzbetrag von der zweiten Frequenz versetzt ist, beinhaltet, wobei der erste und der zweite Versatzbetrag gleich sind.

**Revendications**

1. Système de laser (1) comprenant :

un modulateur optique en quadrature de phase et en phase (4) pour générer un signal optique à porteuse supprimée, bande latérale unique et deux tons par modulation d'un faisceau laser d'entrée ; et

un réseau de Bragg à fibre unique pour recevoir et filtrer le signal optique à porteuse supprimée, bande latérale unique et deux tons délivré par le modulateur optique en quadrature de phase et en phase (4) ;

une bande passante du réseau de Bragg à fibre excluant des harmoniques des deux tons dans le signal optique à porteuse supprimée, bande latérale unique et deux tons ; et

la bande passante du réseau de Bragg à fibre comprenant une première fréquence correspondant à une première transition d'état d'espèces atomiques froides de cible, une deuxième fréquence correspondant à une deuxième transition d'état des espèces atomiques froides de cible, une troisième fréquence décalée par rapport à la première fréquence d'une première quantité de décalage, et une quatrième fréquence décalée par rapport à la deuxième fréquence d'une deuxième quantité de décalage, les première et deuxième quantités de décalage étant les mêmes.

2. Système de laser (1) selon la revendication 1, comprenant un module de commande de fréquence (6) configuré pour délivrer des ensembles de signaux de commande définissant des profils de signal de modulation respectifs au modulateur optique en quadrature de phase et en phase (4), chaque profil de signal de modulation définissant une paire différente de fréquences pour les deux tons dans ledit signal optique à porteuse supprimée, bande latérale unique et deux tons délivré par le modulateur optique en quadrature de phase et en phase (4).

3. Système de laser (1) selon l'une quelconque des revendications 1 à 2, dans lequel :

le modulateur optique en quadrature de phase et en phase (4) comprend un premier interféromètre de Mach-Zehnder (21) et un deuxième interféromètre de Mach-Zehnder (22) sur des premier et deuxième passages optiques parallèles, le faisceau laser d'entrée étant divisé sur les premier et deuxième passages optiques et les sorties des premier et deuxième interféromètres de Mach-Zehnder étant combinées pour former le signal optique à porteuse supprimée, bande latérale unique et deux tons délivré par le modulateur optique en quadrature de phase et en phase (4) ;

le premier interféromètre de Mach-Zehnder (21) comprend un premier guide d'ondes (25) et un deuxième guide d'ondes (26) ;

le deuxième interféromètre de Mach-Zehnder (22) comprend un troisième guide d'ondes (27) et un quatrième guide d'ondes (28) ; et

le modulateur optique en quadrature de phase et en phase (4) est configuré pour commander les phases des signaux modulant la lumière dans les premier à quatrième guides d'ondes (25 à 28) pour délivrer ledit signal optique à porteuse supprimée, bande latérale unique et deux tons ayant une fréquence sélectionnée de ladite bande latérale unique.

4. Système de laser (1) selon l'une quelconque des revendications 1 à 3, comprenant en outre un amplificateur optique (9) prévu pour amplifier la puissance de la sortie du réseau de Bragg à fibre.

5. Système de laser (1) selon l'une quelconque des revendications 1 à 4, comprenant en outre un dispositif de mélange de fréquence optique non linéaire (10) pour multiplier les fréquences du signal optique à porteuse supprimée à deux tons.

6. Système de laser (1) selon l'une quelconque des revendications 1 à 5, dans lequel le modulateur optique en quadrature de phase et en phase est un modulateur LiNbO$_3$ intégré.

7. Appareil quantique à atome froid comprenant un système de laser (1) selon l'une quelconque des revendications 1 à 6.

8. Procédé de fabrication d'un système de laser (1), le procédé comprenant :

la connexion de la sortie d'un modulateur optique en quadrature de phase et en phase (4) à l'entrée d'un réseau de Bragg à fibre unique (6) ;

selon lequel :

le modulateur optique en quadrature de phase et en phase (4) est configuré pour générer un signal optique à porteuse supprimée, bande latérale unique et deux tons par modulation d'un faisceau laser d'entrée ;

le réseau de Bragg à fibre unique est configuré pour recevoir et filtrer le signal optique à porteuse supprimée, bande latérale unique et deux tons délivré par le modulateur optique en quadrature de phase et en phase (4) ; et

une bande passante du réseau de Bragg à fibre exclut des harmoniques des deux tons dans le signal optique à porteuse supprimée, bande latérale unique et deux tons ; et

la bande passante du réseau de Bragg à fibre comprend une première fréquence correspondant à une première transition d'état d'espèces atomiques froides de cible, une deuxième fréquence correspondant à une deuxième transition d'état des espèces atomiques froides de cible, une troisième fréquence décalée par rapport à la première fréquence d'une première quantité de décalage, et une quatrième fréquence décalée par rapport à la deuxième fréquence d'une deuxième quantité de décalage, les première et deuxième quantités de décalage étant les mêmes.

9. Procédé de fabrication selon la revendication 8, selon lequel le modulateur optique en quadrature de phase et en phase (4) comprend un premier interféromètre de Mach-Zehnder (21) et un deuxième interféromètre de Mach-Zehnder (22) sur des premier et deuxième passages optiques parallèles, le faisceau laser d'entrée étant divisé sur les premier et deuxième passages optiques et les sorties des premier et deuxième interféromètres de Mach-Zehnder étant combinées pour former le signal optique à porteuse supprimée, bande latérale unique et deux tons délivré par le modulateur optique en quadrature de phase et en phase (4) ;

le premier interféromètre de Mach-Zehnder (21) comprend un premier guide d'ondes (25) et un deuxième guide d'ondes (26) ;

le deuxième interféromètre de Mach-Zehnder (22) comprend un troisième guide d'ondes (27) et un quatrième guide d'ondes (28) ; et

le modulateur optique en quadrature de phase et en phase (4) commande les phases des signaux modulant la lumière dans les premier à quatrième guides d'ondes (25 à 28) pour délivrer ledit signal optique à porteuse supprimée, bande latérale unique et deux tons ayant une fréquence sélectionnée de ladite bande latérale unique.

10. Procédé de fabrication selon l'une quelconque des revendications 8 à 9, dans lequel le modulateur optique en quadrature de phase et en phase est un modulateur $LiNbO_3$ intégré.

11. Procédé de fabrication selon l'une quelconque des revendications 8 à 10, et comprenant la connexion, en aval du réseau de Bragg à fibre (6), d'un dispositif de mélange de fréquence optique non linéaire (10) configuré pour multiplier les fréquences du signal optique à porteuse supprimée à deux tons.

12. Procédé de génération d'un faisceau lumineux, le procédé comprenant :

l'entrée d'un faisceau laser dans un modulateur optique en quadrature de phase et en phase (4) ;

la modulation du faisceau lumineux par le modulateur optique en quadrature de phase et en phase (4) pour générer un signal optique à porteuse supprimée, bande latérale unique et deux tons par modulation d'un faisceau laser d'entrée ;

l'entrée du signal optique à porteuse supprimée, bande latérale unique et deux tons délivré par le modulateur optique en quadrature de phase et en phase (4) dans un réseau de Bragg à fibre (6) ; et

le filtrage du signal optique à porteuse supprimée, bande latérale unique et deux tons par le réseau de Bragg à fibre (6) ;

une bande passante du réseau de Bragg à fibre excluant des harmoniques des fréquences des deux tons dans le signal optique à porteuse supprimée, bande latérale unique et deux tons ; et

la bande passante du réseau de Bragg à fibre comprenant une première fréquence correspondant à une première transition d'état d'espèces atomiques froides de cible, une deuxième fréquence correspondant à une deuxième transition d'état des espèces atomiques froides de cible, une troisième fréquence décalée par rapport à la première fréquence d'une première quantité de décalage, et une quatrième fréquence décalée par rapport à la deuxième fréquence d'une deuxième quantité de décalage, les première et deuxième quantités de décalage étant les mêmes.

# FIG.1

1

$LB_1$

$LB_2 \in$ Selected sidebands + unwanted harmonics

$LB_3 \in$ Selected sidebands

| LS |
|----|
| 2 |

| IQM |
|-----|
| 4 |

| FBG |
|-----|
| 6 |

| OA |
|----|
| 9 |

$LB_4$

| F-CM |
|------|
| 8 |

| NLOFM |
|-------|
| 10 |

$LB_4$

$LB_5$

# FIG.2

23

21

$C_1$    $C_2$

| 25 |
|----|

| 26 |
|----|

$LB_1$

| 27 |
|----|

| 28 |
|----|

4

22

$C_3$    $C_4$    $C_5$

$LB_2$

## FIG.3A

$LB_2$

$\omega-\Omega_2$  $\omega-\Omega_1$  $\omega$  $\omega+\Omega_1$  $\omega+\Omega_2$

## FIG.3B

$LB_2$

$\omega-\Omega_4$  $\omega-\Omega_3$  $\omega$  $\omega+\Omega_3$  $\omega+\Omega_4$

## FIG.4

52    6

$LB_2$    $LB_3$

54
55

# FIG.5A

LB$_2$

$\omega-\Omega_2$     $\omega-\Omega_1$     $\omega$     $\omega+\Omega_1$     $\omega+\Omega_2$

Passband of
FBG, 6

LB$_3$

$\omega-\Omega_2$     $\omega-\Omega_1$     $\omega$     $\omega+\Omega_1$     $\omega+\Omega_2$

# FIG.5B

LB$_2$

$\omega-\Omega_4$     $\omega-\Omega_3$     $\omega$     $\omega+\Omega_3$     $\omega+\Omega_4$

Passband of
FBG, 6

LB$_3$

$\omega-\Omega_4$     $\omega-\Omega_3$     $\omega$     $\omega+\Omega_3$     $\omega+\Omega_4$

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016142148 A

- US 2007104492 A

**Non-patent literature cited in the description**

- **ZHU, L.-X. ; LIEN, Y.-H. ; HINTON, A. ; NIGGE-BAUM, A. ; RAMMELOO, C. ; BONGS, K. ; HOLYNSKI, M.** Application of Optical Single-Sideband Laser in Raman Atom Interferometry. *Opt. Express*, 2018, vol. 26 (6), 6542
- **TEMPLIER, S. et al.** Carrier-Suppressed Multiple-Single-sideband Laser Source for Atom Cooling and Interferometry. *Phys. Rev. Applied*, 2021, vol. 16 (4), 044018

- **MACRAE, C. D. ; BONGS K. ; HOLYNSKI, M.** Optical Frequency Generation Using Fiber Bragg Grating Filters for Applications in Portable Quantum Sensing. *Opt. Lett.*, 2021, vol. 46 (6), 1257
- High-Capacity Single-Sideband Suppressed-Carrier Modulation with Integrated Optical Filter in Silicon-on-Insulator Technology. **PORZI, C. et al.** 2019 International Workshop on Fiber Optics in Access Networks (FOAN). IEEE, 02 September 2019, 29-33